# EUROPEAN PATENT APPLICATION

(11) **EP 1 437 892 A1**
(43) Date of publication of application: **14.07.2004**
(21) Application number: 02801577.4
(22) Date of filing: 15.10.2002
(51) Int. Cl.: H04N 5/93, G11B 20/10, G11B 27/00, G10L 19/00

(54) **FILE CREATION APPARATUS AND DATA OUTPUT APPARATUS**

(30) Priority: 16.10.2001 JP 2001318441
(71) Applicant: Seiko Epson Corporation, Shinjuku-ku, Tokyo 163-0811 (JP)
(72) Inventor: HASEGAWA, Hiroshi c/o SEIKO EPSON CORPORATION, Suwa-shi, Nagano 392-8502 (JP); KUWATA, Naoki c/o SEIKO EPSON CORPORATION, Suwa-shi, Nagano 392-8502 (JP)
(74) Representative: Winter, Brandl, Fürniss, Hübner, Röss, Kaiser, Polte Partnerschaft
(86) International application number: PCT/JP2002/010697
(87) International publication number: WO 2003/034724

(57) **Abstract**

Provides a technique for obtaining, for audio data, motion picture data, or the like, output reflecting characteristics of a reproduction apparatus, as well as the intention of the data creator. When making various kinds of data, i.e. a coded electrical signal accompanied by lapse of time, into a file, an output control parameter for controlling output state of the data is also stored in the file. The output apparatus references this output control parameter in order to perform output control so as to reflect the characteristics of the reproduction apparatus and the intentions of the creator.

## Description

### TECHNICAL FIELD

The present invention relates to a technique for controlling output of data that is a coded electrical signal accompanied by passage of time.

### BACKGROUND ART

During the creation process, data such as motion picture recorded on videotape or DVD or music recorded on a CD, is subjected to various effects, such as fade in and fade -out, tone correction, frequency equalizing, echo effects, or the like. As regards reproduction apparatus for reproducing such data, a lineup of various products are available from manufacturers.

However, it is difficult for the data creator to create data which takes into consideration the individual characteristics of all of the different kinds of reproduction devices. Thus, instances in which an effect that is effective with a certain device is not effectively perceived with another device sometimes occurs. For example, during reproduction of music subjected to a fade in process, due to differences in reproducible volume range, a stereo device equipped with large-diameter speakers may sound as if the volume increases in linear fashion, whereas when listened to with the headphones of a portable player, it may sound as if the volume increases suddenly. As another example, when motion picture created based on the color of one manufacturer's television set is played back on a television of another manufacturer, skin tone may appear reddish in some instances, or the like.

The present invention was made in view of the aforementioned problems, and has as an object to provide a technique for output of data that reflects the characteristics of the reproduction apparatus and the intention of the data creator, without creating data according to individual reproduction environments.

### DISCLOSURE OF THE INVENTION

To address the aforementioned problems at least in part, the invention in a first aspect thereof employs a file creation apparatus comprising a data input module for inputting data that is a coded electrical signal accompanied by passage of time, a parameter input module for inputting an output control parameter that controls time dependent output state of said data in an output apparatus that decodes and outputs said data, and a file creation module for creating a file comprising said data and said output control parameter.

By means of such an arrangement, it is possible to create a file wherein time dependent output state of the data is controllable. For example, control whereby output state is made to vary continuously or stepwise according to the passage of time, or control whereby output state is made to vary at a certain definite time unit, become possible. Data which is a coded electrical signal accompanied by passage of time can refer, for example, to audio data or motion picture data. In this invention and the several inventions to be described hereinbelow, "coding" refers to digitization, compression, encryption, or the like, and "decoding" refers to the corresponding analog conversion, decompression, decryption, or the like.

In the aforementioned arrangement, said file creation module may create a file by means of arranging a plurality of frames of data comprising at least a portion of said data, and said output control parameter.

With such an embodiment, detailed output control can be performed on an individual frame data basis. As regards frame data, where the data is audio data, for example, data derived by segmenting audio data in arbitrary units of time and appending to each segment a header that includes an output control parameter can be used as the frame data. Where the data is motion picture data, frame data may be derived by appending a header that includes an output control parameter, to each image displayed each 1/30 second. By arranging a plurality of such frames of data, a single file is created. The size of each frame of data in the file may be of fixed length or variable length.

In the aforementioned arrangement, said output control parameter may control fade in or fade out output of said data.

By means of such an arrangement, a fade in or fade out process by the output apparatus becomes possible. For example, in the case of audio data, a fade in or fade out process through control of volume becomes possible; or in the case of motion picture data, control of brightness and display area size becomes possible.

In the aforementioned arrangement, said output control parameter may specify a portion for output when changing output speed of said data.

With such an embodiment, in a process such as fast forward output in an output apparatus, a portion of data for output can be specified. For example, control such that, with data having moderate change in output, the interval to the next output data is made longer, whereas data having sudden change in output is output at short intervals is possible. Such portions may be specified in terms of time, or specified in terms of frames for output.

In the aforementioned arrangement, said output control parameter may control switching of output state at predetermined timing.

Switching of output state is preferably accomplished by changing any of a number of perceptible parameters relating to output. With such an embodiment, it is possible to perform switching of output state by, for example, in the case of music data, varying the volume or timbre, or the effect implemented, during key changes or at the end of the first movement of a piece; or in the case of motion picture, by varying tone or brightness during scene changes. Switching is not limited to a single point, a plurality of points being possible.

In the aforementioned arrangements or various embodiments, said parameter input module may input an output control parameter depending on output environment in said output apparatus. With such an embodiment, it becomes possible to control output depending on output environment in an output apparatus. For example, where data is audio data, the initial volume level for the fade in process can be established according to the dynamic range of the output apparatus, or an equalization process can be established in order to cut high notes depending on the frequency characteristics thereof. A parameter may also be set depending on the surrounding environment in which the output apparatus is situated, such as a living room, concert hall, or the like. Where data is motion picture data, tone, initial brightness for a fade in process, or other settings may be made depending on the characteristics of the apparatus displaying the motion picture, such as a CRT, television, projector, plasma display, or the like.

In the aforementioned arrangements or various embodiments, said output control parameter may consist of data output while omitting a portion of said data.

This corresponds, for example, to a control parameter that reproduces only a portion of a time range, derived by culling out some frames from among all of the frames of audio data or motion picture data. By using such a parameter, in the event that, for example, "digest mode" has been specified, it is simple matter to reproduction only a certain specified scene, such as a portion of audio data representing the chorus, or the portion of motion picture data representing the climax.

The aforementioned parameter may be data for reducing the amount of information of each frame of audio data or motion picture data. For example, in the event that a preview has been specified, the high note range and low note range of audio data can be eliminated, to play it back with somewhat degraded sound quality; or the resolution of motion picture data decreased to play it back at lower picture quality. Where audio data or motion picture data is distributed via a network, under conditions in which preview is specified, reproduction at acceptable sound quality or picture quality does not take place, thereby encouraging users to acquire the audio data or motion picture data legitimately.

The aforementioned parameter may information trimming a portion of motion picture data. By so doing, for example, where motion picture is played back on a low-resolution display apparatus, human expression, text, and other such important parts can be displayed in a visible condition.

In the aforementioned arrangements or various embodiments, where said data includes a plurality of channels, said output control parameter may be data for controlling output state in individual channel units.

By so doing, for example, where an output apparatus that cannot play back all of the channels contained in the data is employed, the channel that is played back can be controlled in such a way that adequate acoustic effects or motion picture effects are obtained. For example, in a clip in which low notes should be boosted, the low note channel can be used preferentially, whereas in other clips the low note channel can be cut.

The invention in a second aspect thereof employs a file creation apparatus comprising a file input module for inputting a file, said file comprising data which is a coded electrical signal accompanied by passage of time, and an output control parameter for controlling time dependent output state of said data, and an output control module for controlling the output state of decoded said data, making reference to said output control parameter.

By means of such an arrangement, output state of data can be controlled with reference to the output control parameter. As noted, data which is a coded electrical signal accompanied by passage of time herein can be either audio data or motion picture data. Data output state is controllable on the basis of the various kinds of output control parameter described with reference to the first aspect of the invention.

The invention in a third aspect thereof may employ the following apparatus. Specifically, it resides in an audio file creation apparatus for creating audio files, comprising an audio data input module for input of audio data, a parameter input module for input of a reproduction control parameter for controlling reproduction state of said audio data depending on the reproduction apparatus reproducing said audio data, and an audio file creation module for creating an audio file, said file comprising said audio data and said reproduction control parameter.

By means of such an arrangement, reproduction state can be controlled depending on the reproduction apparatus, and reproduction matching the intention of the audio file creator can be realized.

In the aforementioned arrangement, said reproduction control parameter may control at least a portion of the frequency components of said audio data. With such an embodiment, it is possible to perform equalization processing of various kinds on audio data. For example, low frequencies can be boosted, or high frequencies can be cut.

In the aforementioned arrangement, said reproduction control parameter may control volume during reproduction of said audio data. With such an embodiment, it is possible to control volume in a flexible manner.

In the aforementioned arrangement, said reproduction control parameter may control repeated reproduction of at least a portion of said audio data. With this arrangement, a conceivable embodiment is one wherein, for one portion for repeated performance [selected from] a series of audio data, audio data corresponding to a single performance only is recorded, and at least some parameters such as the number of times the portion is repeated, or volume, timbre, effects and the like during repetition, are controlled by means of the reproduction control parameter. With such an embodiment, data which, according to the prior art, was recorded [according to the number of times] repeated, now need only be recorded once. Thus, the volume of data can be reduced.

The invention in a fourth aspect thereof employs an audio data reproduction apparatus for reproducing audio data, said apparatus comprising an audio file input module for inputting an audio file that contains audio data and a reproduction control parameter for controlling time dependent output state of said data, and a reproduction control module for controlling reproduction state of said audio data, with reference to said reproduction control parameter.

With such an arrangement, the reproduction state of audio data can be controlled by referring to the reproduction control parameter. Reproduction state is controllable on the basis of various kinds of reproduction control parameter described in the third aspect of the invention.

The invention in a fifth aspect thereof employs a motion picture file creation apparatus for creating motion picture files, comprising a motion picture data input module for input of motion picture data, a parameter input module for input of a reproduction control parameter for controlling time dependent reproduction state of said motion picture data in on the reproduction apparatus reproducing said audio data, and a motion picture file creation module for creating a motion picture file, said file comprising said motion picture data and said reproduction control parameter.

With such an arrangement, it is possible to create a file whose motion picture data output state can be controlled.

In the aforementioned arrangement, said reproduction control parameter may control repeated reproduction of at least a portion of said motion picture data.

With such an embodiment, motion picture data which, according to the prior art, was recorded according to the number of times repeated, now need only be recorded once. Thus, the volume of data can be reduced.

In the aforementioned arrangement, said motion picture data may include character string data displayed simultaneously with motion picture, and said reproduction control parameter may control at least one parameter selected from display location, size, and color of said character string data.

With such an embodiment, for example, the location, size, and color of character string data recorded together with motion picture data may be controlled depending on the passage of time. Apart from control depending on the passage of time, control may be exercised in a manner dependent on the characteristics of the reproduction apparatus or environment thereof.

The invention in a sixth aspect thereof employs a motion picture data reproduction apparatus for reproducing motion picture data, comprising a motion picture file input module for inputting a motion picture file that contains motion picture data and a reproduction control parameter for controlling time dependent output state of said data, and a reproduction control module for controlling reproduction state of said motion picture data, with reference to said reproduction control parameter.

With such an arrangement, the reproduction state of motion picture data can be controlled by referring to the reproduction control parameter. Reproduction state is controllable on the basis of various kinds of reproduction control parameter described in the fifth aspect of the invention.

As noted hereinabove, the present invention can take the aspect of a file creation device, data output device, audio file creation device, audio data reproduction device, motion picture file creation device, or motion picture data reproduction device; additionally, it may take the aspect of a file creation method, data output method, audio file creation method, audio data reproduction method, motion picture file creation method, or motion picture data reproduction method.

Where any of the apparatus described hereinabove is reduced to practice using a computer, the invention may take the aspect of a program for realizing the functions thereof. Where taking the aspect of a program, the program may be recorded on a computer-readable medium such as a flexible disk, CD-ROM, DVD, MO, IC card, ROM cartridge, or hard disk.

### BRIEF DESCRIPTION OF THE DRAWINGS

FIG. 1 is a simple block diagram of an audio file creation apparatus;
FIG. 2 is a flowchart of an audio file creation process;
FIG. 3 is a simplified construction drawing of an audio file;
FIG. 4 is a simplified construction drawing of another form of audio file;
FIG. 5 is a detailed construction drawing of a header stored in an audio file;
FIG. 6 is a simple block diagram of an audio reproduction apparatus;
FIG. 7 is a flowchart of an audio reproduction process;
FIG. 8 is a simple block diagram of a motion picture file creation apparatus;
FIG. 9 is a flowchart of a motion picture file creation process;
FIG. 10 is a detailed construction drawing of a header stored in a motion picture file;
FIG. 11 is a simple block diagram of a motion picture reproduction apparatus;
FIG. 12 is a flowchart of a motion picture reproduction process; and
FIG. 13 is a simplified construction drawing of a motion picture file having a fast forward reproduction parameter established.

### BEST MODE FOR CARRYING OUT THE INVENTION

The embodiments of the invention shall be described in the order indicated below, with reference to the drawings.
A. Working Example 1
   (A1) Audio File Creation Apparatus:
   (A2) Audio File Creation Process:
   (A3) Audio File Structure:
   (A4) Audio Reproduction Apparatus:
   (A5) Audio Reproduction Process:
   (A6) Reproduction Control:
B. Working Example 2
   (B1) Motion picture File Creation Apparatus:
   (B2) Motion picture File Creation Process:
   (B3) Motion picture File Structure:
   (B4) Motion picture Reproduction Apparatus:
   (B5) Motion picture Reproduction Process:
   (B6) Reproduction Control

### A. Working Example 1

### (A1) Audio File Creation Apparatus:

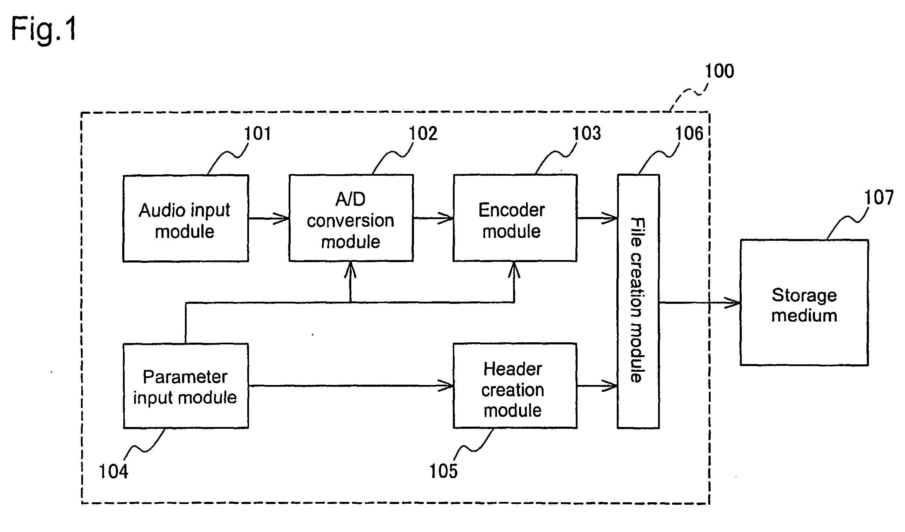

FIG. 1 is a simple block diagram of an audio file creation apparatus. The audio file creation apparatus 100 creates audio files that include audio data created by coding an audio signal, i.e. an electrical signal accompanied by passage of time, and a head that records parameters of various kinds. Audio file creation apparatus 100 is composed of an audio input module 101, and A/D conversion module 102, an encoder module 103, a parameter input module 104, a header creation module 105, a file creation module 106, etc.

Audio input module 101 may use a mike or the like to convert sound into an electrical signal to produce an audio signal. A/D conversion module 102 converts the audio signal, which is an analog signal, into a digital signal at a specified sampling rate and number of quantization bits. Encoder module 103 codes the digitized audio using a specified encoding format, to create audio data. The encoding format may use MP3 format, PCM format, or the like. Parameter input module 104 performs input of the aforementioned sampling rate, number of quantization bits, and encoding format. Parameter input module 104 also inputs, from a user, reproduction control parameters which are referred to by an audio reproduction device, described later. Header creation module 105 creates a header that records various parameters input by parameter input module 104. File creation module 106 creates an audio file that includes the aforementioned created audio data and the header. The created audio file is stored in a storage medium 107.

MP3 format is a format for compressing audio through various processes such as decomposition into sub-bands, perceptual evaluation, modified discrete cosine transform (MDCT), quantization, Huffman coding, or the like. PCM format is a format in which audio is simply digitized at an arbitrary sampling rate and number of quantization bits. Since both are known art, they will be not discussed in detail in the working examples.

### (A2) Audio File Creation Process:

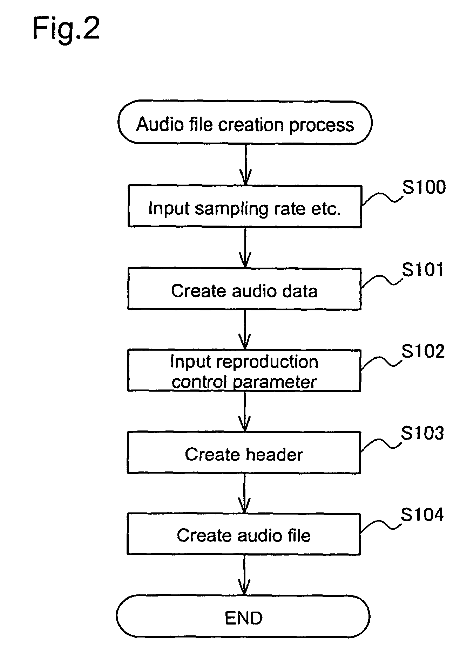

FIG. 2 is a flowchart of an audio file creation process. In order to transform audio into data in the form of a digital signal, audio file creation apparatus 100 first inputs, via parameter input module 104, specification of sampling rate, number of quantization bits, encoding format, etc. by the user (Step S100). On the basis of these specified [parameters], audio file creation apparatus 100 inputs audio using the audio input module 101, A/D conversion module 102, and encoder module 103, and creates audio data (Step S101). Next, audio file creation apparatus 100 inputs reproduction control parameters from the user, via parameter input module 104 (Step S102). Audio file creation apparatus 100 then creates a header in which are recorded the input reproduction control parameters, as well as the aforementioned input sampling rate, number of quantization bits, and encoding format (Step S103). Finally, the audio file creation apparatus 100 creates an audio file containing the audio data created using file creation module 106 in Step S101, and the header created in Step S103 (Step S104).

### (A3) Audio File Structure:

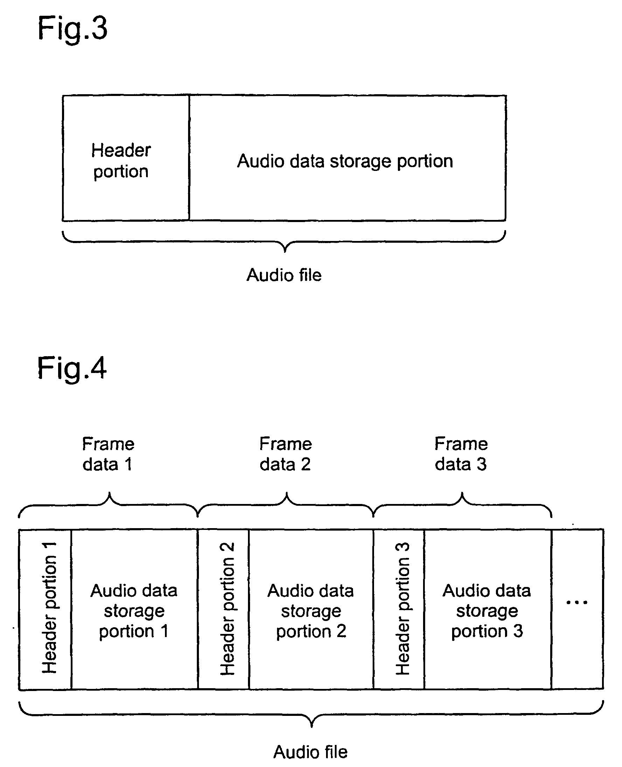

FIG. 3 is a simplified construction drawing of an audio file created by the audio file creation process that has been described hereinabove. The audio file is composed of a header portion that stores a header; and an audio data storage portion that stores audio data. The audio file may take a form composed of a single header and a single set of audio data, as it is here; or alternatively take the form of an arrangement of a series of multiple sets of frame data containing headers and audio data, as shown in FIG. 4. With this [latter] form, since various parameters can be established in frame data units, fine grained reproduction control can be carried out during audio reproduction.

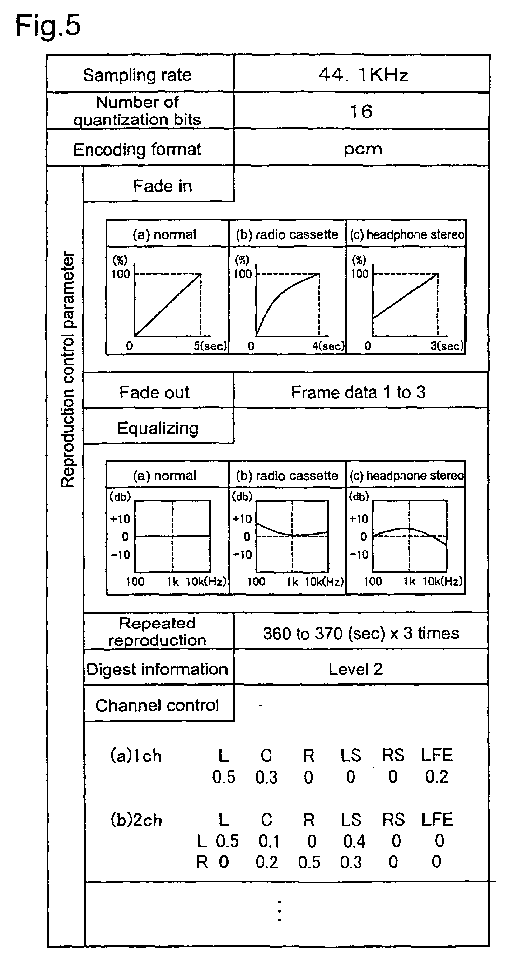

FIG. 5 is a detailed construction drawing of the aforementioned header. As shown in the drawing, the header has recorded the sampling rate, number of quantization bits, and encoding format of the corresponding audio data. The audio reproduction device, described later, performs decoding of audio data with reference to these parameters.

The header additionally records reproduction control parameters. The reproduction control parameters, by being referred to during audio reproduction by the audio reproduction device, described later, make possible various kinds of reproduction control. A description of reproduction control through various parameters such as the illustrated "fade in" and "fade out" will be given later.

### (A4) Audio Reproduction Apparatus:

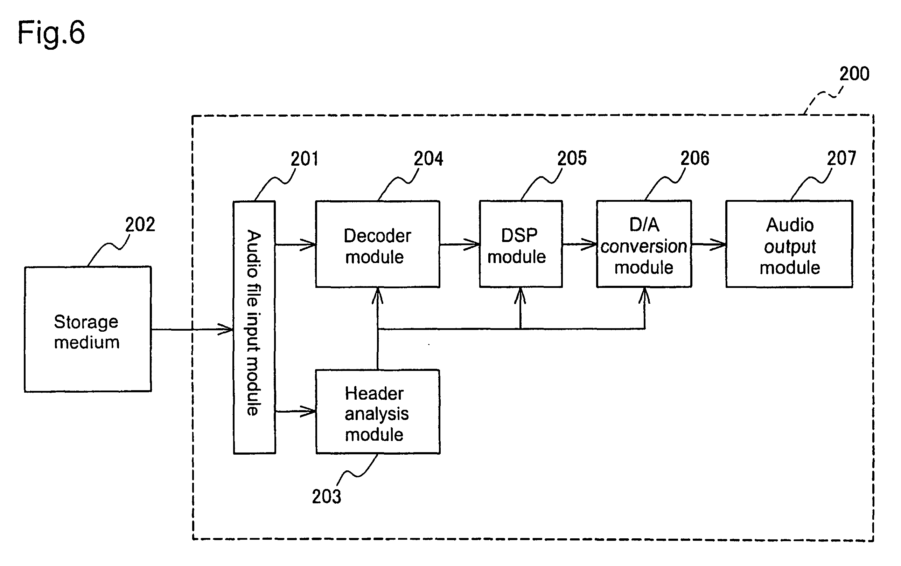

FIG. 6 is a simple block diagram of an audio reproduction apparatus. The audio reproduction apparatus 200 of this working example reproduces audio using audio files created by the audio file creation apparatus 100. Audio reproduction apparatus 200 comprises an audio file input module 201, a header analysis module 203, a decoder module 204, a DSP module 205, a D/A conversion module 206, an audio output module 207, etc.

Audio file input module 201 inputs an audio file from a storage medium 202. Header analysis module 203 extracts and analyzes the header from the input audio file. Decoder module 204 inputs audio data from the audio file, and decodes the audio data on the basis of encoding format, sampling rate, and number of quantization bits analyzed by the header analysis module 203. On the basis of reproduction control parameters analyzed by the header analysis module 203, DSP module 205 performs reproduction control on the decoded audio data. D/A conversion module 206 converts the audio data, which is a digital signal, into an analog signal. Audio output module 207 comprises an amp and speakers or headphones, etc., and outputs audio based on the aforementioned analog signal.

### (A5) Audio Reproduction Process:

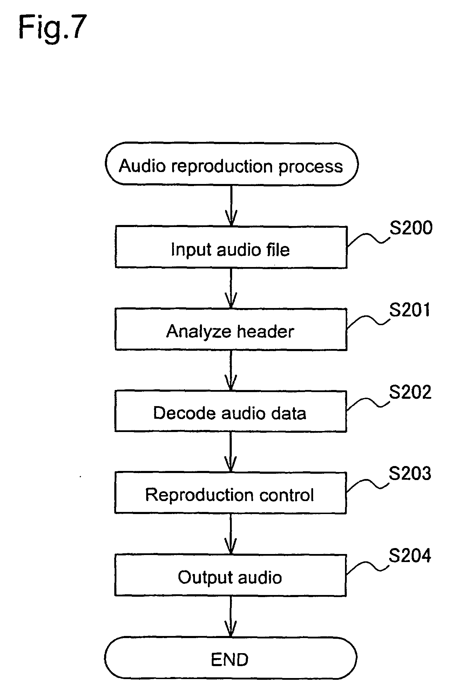

FIG. 7 is a flowchart of the audio reproduction process. First, audio reproduction apparatus 200 inputs an audio file from storage medium 202 (Step S200). A header and audio data are stored in the audio file. Consequently, audio reproduction apparatus 200 first analyzes by header with the header analysis module, to acquire parameters such as sampling rate, number of quantization bits, encoding format and reproduction control parameters of the audio data (Step S201). Of these acquired parameters, on the basis of sampling rate, number of quantization bits, and encoding format, the audio reproduction apparatus 200 decodes the audio data with the decoder module (Step S202). Next, on the basis of the reproduction control parameters acquired in Step S201, the audio reproduction apparatus 200 performs reproduction control of the decoded audio data using the DSP module (Step S203). The audio reproduction apparatus 200 converts the reproduction controlled audio data into an analog signal using the D/A conversion module 206, and outputs it to the audio output module (Step S204).

In this working example, D/A conversion is carried out when the decoded audio data is output in the DSP module 205; provided that the audio data is of PWM (pulse width modulation) format, for example, it is also possible to perform audio output via an analog filter, without using D/A conversion.

### (A6) Reproduction Control:

Next, reproduction control of audio data based on reproduction control parameters will be described, again using FIG. 5. The reproduction control parameters of FIG. 5 establish a fade in process, a fade out process, an equalizing process and repeated reproduction process, digest information, and channel control. The audio reproduction apparatus controls audio reproduction according to the instructions of these parameters.

The "fade in" parameter is set to a profile for (a) normal, (b) radio cassette, or (c) headphone stereo use. Thus, audio reproduction apparatus 200 selects the profile most suited to its own characteristics, and carries out fade in processing of the audio data. In the graphs in the drawing, the horizontal axis represents time at which the fade in processing is performed, and the vertical axis represents a coefficient multiplied by the amplitude of the original audio data. The data range over which fade in processing is performed may be set in terms of time, or set by indicating a frame data range. The parameter can be set by means of defining a computational equation directly in the parameter, rather than a profile. Where a computational equation has been predefined by audio reproduction apparatus 200, a predetermined coefficient for use in the computational equation may be established in the parameter.

The "fade out" parameter is set to "Frame Data 1 -3". This method of setting can be utilized when reproducing audio using an audio file composed of a plurality of frames of data, and means a process of gradually reducing the volume from Frame Data 1 to Frame Data 3. Of course, as with fade in processing, specification by means of a profile, computational equation or coefficient can be performed.

The "equalizing" parameter, like the fade in parameter, is set to three types of profile. Audio reproduction apparatus 200 selects the profile most suited to its own characteristics, and carries out an equalizing process. In the graphs in the drawing, the horizontal axis represents audio frequency band, and the vertical axis represents the extent of boost. In this case as well, specification can be performed by means of a computational equation or coefficient, rather than a profile. For example, where a signal in a specified frequency range with respect to a signal of a time range such as the PCM format, for example, is boosted or, conversely, cut, it is typical practice to perform a digital filter process; by defining a computational equation or filter coefficient for this digital filter in the parameter, it becomes possible to apply modulation in the frequency range.

In the "repeated reproduction" parameter are set the duration and number of times for performing repeated reproduction. According to the drawing, a process to reproduce repeatedly three times audio data in range of 360 seconds to 370 seconds in the audio data is performed. As the method of specification, besides specifying in terms of time, it would be possible to establish a range of frame date to be repeated.

"Digest information" is data indicating frames to be reproduced when reproduction is instructed in digest mode. In this working example, frame level within the range 1 -5 is assigned to frames. A digest level of "1" means a highly important frame, with importance decreasing the larger the number. "Level 2" digest information means that, in digest mode, frames assigned Level 1 or Level 2 will be reproduced, while reproduction of frames assigned Levels 3 -5 will be omitted. By means of the digest level assigned to each frame, during reproduction in digest mode, the segment for reproduction can be readily controlled. For example, in the case of audio data, it is possible in digest mode to reproduce only the chorus segment; or in the case of motion picture data, it is possible in digest mode to reproduce only the climax scene. By modifying digest information, the range for reproduction in digest mode can be controlled without modifying information for each frame.

Besides such information for controlling reproduction range, as digest information for motion picture data, it is possible to use information controlling trimming of each frame. By so doing, when motion picture data is reproduced by a display device having low resolution, for example, it is possible to trim the motion picture for display, so that human expressions, text, and other important portions are displayed in readily visible condition.

"Channel information" is data that, in the case of multi-channel data, controls reproduction of each channel depending on the output device. In the example in the drawing, audio data has a left channel (L), right channel (R), center channel (C), left surround (LS), right surround (RS), and low frequency effects channel (LFE). Where this audio data is reproduced by a one-channel output device, as illustrated, output is mixed at proportions of 0.5 for the L channel, 0.3 for the C channel, and 0.2 for the LFE channel. Where this audio data is reproduced by a two-channel output device, output from the left channel (L) is mixed at proportions of 0.5 for the L channel, 0.1 for the C channel, and 0.4 for the LS channel. From the right channel (R), output is mixed at proportions of 0.2 for the C channel, 0.5 for the R channel, and 0.3 for the LS channel. By exercising control in channel units in this way, depending on the number of channels of an output device, it is possible to achieve output that reflects intention when the audio data was created. In this working example, channel control is embedded in the header portion, but could instead be embedded in each frame. By so doing, the channel for boosting can be switched among each individual segment in audio data, whereby achieve output that reflects intention when the audio data was created becomes possible.

Where audio data has been encoded in MP3 format, for example, the equalizing process described hereinabove can be carried out once the data, having passed through Huffman decoding, inverse quantization, or other processing to be converted to a frequency range signal. In this case, it is acceptable to multiply by a weighting coefficient for each frequency in the frequency range. The processes of "fade out", "fade in" and "repeated reproduction" may be performed on a time range signal [derived] from the data by inverse MDCT conversion or the like subsequent to the aforementioned processing. In a time range, amplitude of sound of each data corresponds to a digitized one, so "fade in", "fade out" and the like can be realized by means of multiplying by a weighting coefficient or the like to adjust amplitude.

By using the reproduction control parameters described hereinabove, an audio reproduction apparatus can implement fade in or fade out processing taking into consideration its own characteristics. The headphone stereo profile set for the fade in parameter of FIG. 5 sets the volume to high at the start of fade in, and is therefore effective during reproduction by headphones, which have a narrow dynamic range; also, where headphone stereo profile set by means of the equalizing parameter is used, it is possible to cut output of high frequency components, so that when used in a train or the like, audible high tones that could annoy others can be prevented.

A parameter for controlling volume could be appended as well. Where an audio file is constituted by a single header, control by means of specifying a time, keeping the volume low from a certain time up to a certain time and increasing the volume once a certain time has elapsed, would be possible. Where an audio file is constituted by frame data, detailed setting of volume for each frame is possible. Also, where an audio reproduction apparatus is equipped with a reverb function or compressor function, or with a pitch shift function or various other such effect functions, parameters which utilize these functions may be appended as well.

The various processes such as fade in, fade out, equalizing etc. described hereinabove can also be controlled irrespective of the characteristics of an audio reproduction apparatus. In this case, positive effects intended by the creator of the data can be reflected.

### B. Working Example 2

### (B1) Motion picture File Creation Apparatus:

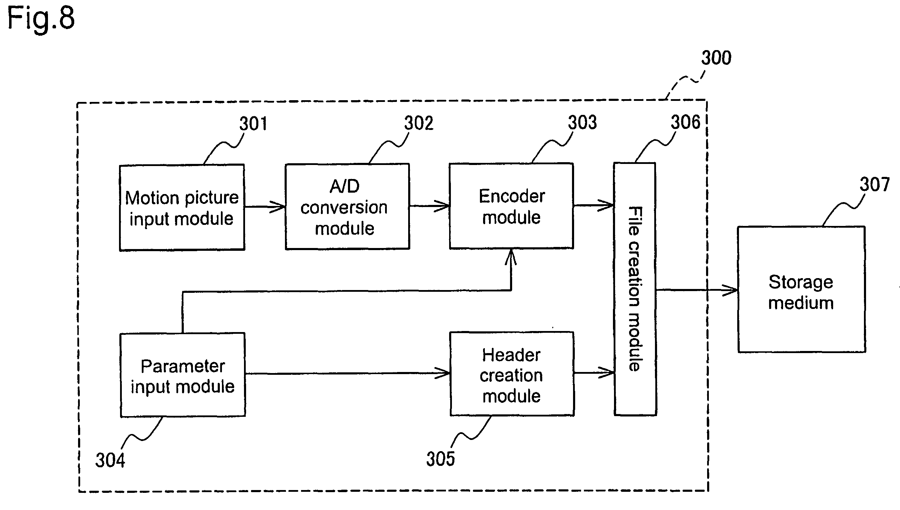

A motion picture file creation apparatus that handles a motion picture signal as an electrical signal accompanied by passage of time is now described. FIG. 8 is a simple block diagram of a motion picture file creation apparatus. Motion picture file creation apparatus 300 is composed of a motion picture input module 301, and A/D conversion module 302, an encoder module 303, a parameter input module 304, a header creation module 305, a file creation module 306, etc.

Audio input module 301 may use a CCD camera or the like to convert a motion picture image into an electrical signal. A/D conversion module 302 converts the motion picture image, input as an electrical signal, into a digital signal. Encoder module 303 codes the digitized audio using a specified encoding format, to create motion picture data. The encoding format may use DV format, MPEG format, or the like. Parameter input module 304 performs input of the aforementioned encoding format, as well as user-selected reproduction control parameters which are referred to by a motion picture reproduction device, described later. Header creation module 305 creates a header that records various parameters input by parameter input module 304. File creation module 306 creates a motion picture file that includes the aforementioned created motion picture data and the header. The created motion picture file is stored in a storage medium 307.

### (B2) Motion picture File Creation Process:

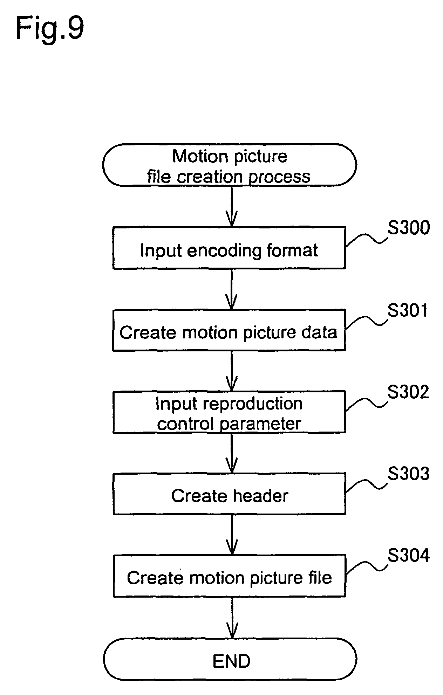

FIG. 9 is a flowchart of the motion picture file creation process. First, motion picture file creation apparatus 300 inputs the encoding format for encoding the input motion picture image, from the user via parameter input module 304 (Step S300). On the basis of the input encoding format, motion picture file creation apparatus 300 inputs motion picture using the motion picture input module 301, A/D conversion module 302, and encoder module 303, and creates motion picture data (Step S301). Next, motion picture file creation apparatus 300 inputs reproduction control parameters from the user, via parameter input module 304 (Step S302). Motion picture file creation apparatus 300 then creates a header in which are recorded the input reproduction control parameters, as well as the aforementioned encoding format (Step S303). Finally, the motion picture file creation apparatus 300 creates a motion picture file containing the motion picture data created using file creation module 306 in Step S301, and the header created in Step S303 (Step S304).

### (B3) Motion picture File Structure:

Motion picture files created by means of the motion picture file creation process described hereinabove have structure similar to the structure of the audio file described previously. That is, in the audio file structure shown in FIG. 3, the header portion stores the header created in Step S303 of the aforementioned motion picture file creation process, while the audio data storage portion, as the motion picture data storage portion, stores the motion picture data created in the aforementioned Step S301. In a motion picture file as well, an arrangement using frame data may be employed. In this case as well, it is achievable with a structure similar to the audio file structure shown in FIG. 4.

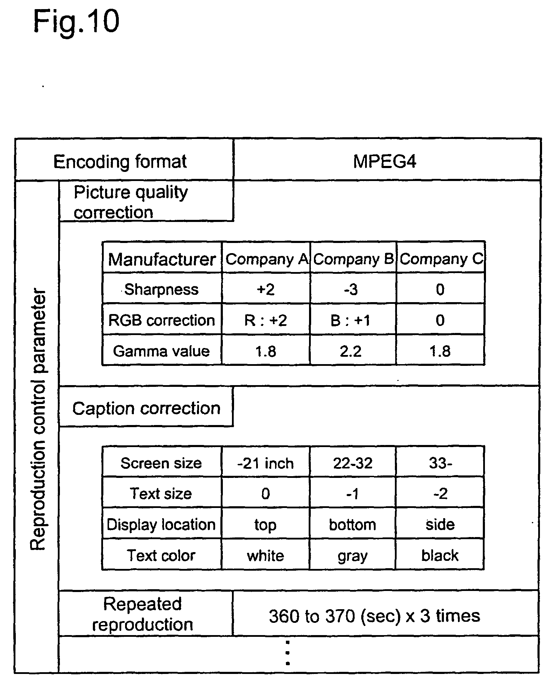

FIG. 10 is a detailed construction drawing of the aforementioned header. As shown in the drawing, the header has recorded the encoding format of the motion picture data. The motion picture reproduction device, described later, performs decoding of motion picture data with reference to this parameter. From the drawing, it will be apparent that it is encoded in the "MPEG4" format.

Additionally, reproduction control parameters are recorded in the header. The reproduction control parameters, by being referred in the audio reproduction device described later, make possible various kinds of reproduction control. According to the drawing, parameters relating to picture quality correction, caption correction, and repeated reproduction are set. A description of reproduction control using these parameters will be described later.

### (B4) Motion picture Reproduction Apparatus:

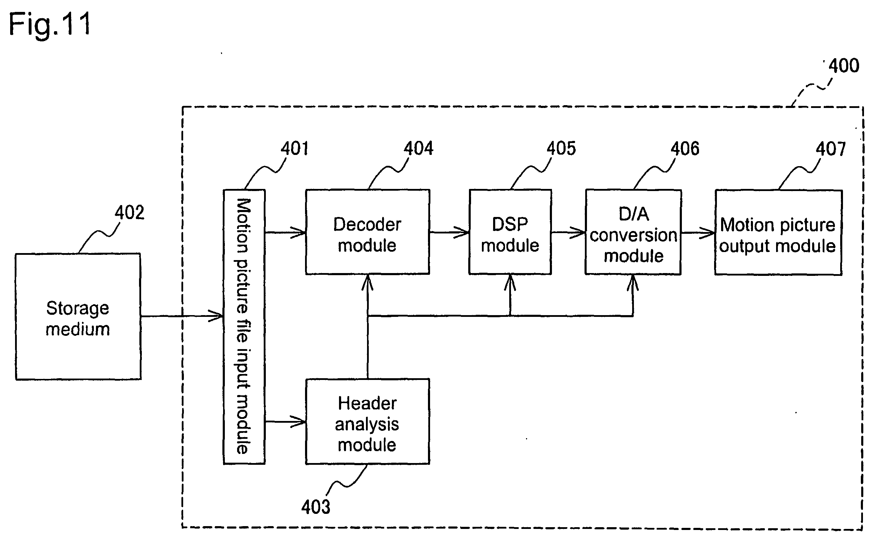

FIG. 11 is a simple block diagram of a motion picture reproduction apparatus. The motion picture reproduction apparatus 400 in this working example reproduces motion picture using motion picture files created by the motion picture file creation apparatus 300. Motion picture reproduction apparatus 400 comprises a motion picture file input module 401, a header analysis module 403, a decoder module 404, a DSP module 405, a D/A conversion module 406, a motion picture output module 407, etc.

Motion picture file input module 401 inputs a motion picture file from a storage medium 402. Header analysis module 403 extracts and analyzes the header from the input motion picture file. Decoder module 404 decodes the motion picture data in the motion picture file on the basis of encoding format analyzed by the header analysis module 403. On the basis of reproduction control parameters analyzed by the header analysis module 403, DSP module 405 performs reproduction control on the decoded motion picture data. D/A conversion module 406 converts the motion picture data, which is a digital signal, into an analog signal such as an RGB signal or composite signal. The motion picture output module is composed of a CRT, television, or the like, and outputs a motion picture image based on the aforementioned analog signal.

### (B5) Motion picture Reproduction Process:

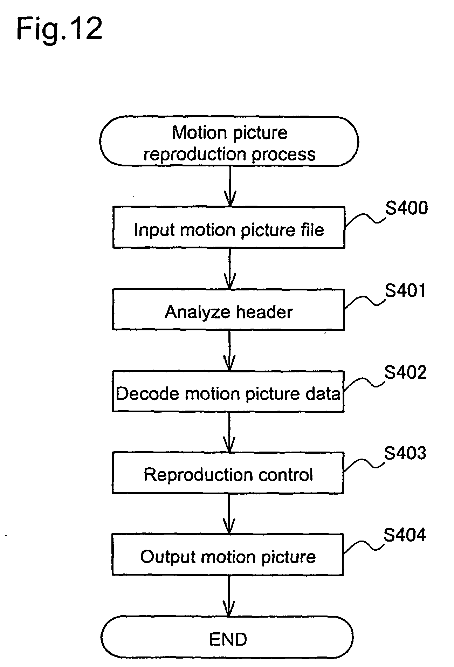

FIG. 12 is a flowchart of the motion picture reproduction process. First, motion picture reproduction apparatus 400 inputs a motion picture file from storage medium 402 (Step S400). A header and motion picture data are stored in the motion picture file. Consequently, motion picture reproduction apparatus 400 first analyzes by header with the header analysis module, to acquire a parameter indicating the encoding format of the motion picture data, and reproduction control parameters (Step S401). On the basis of the acquired parameter indicating encoding format, the motion picture reproduction apparatus 400 decodes the motion picture data (Step S402). Next, on the basis of the reproduction control parameters acquired in Step S401, the motion picture reproduction apparatus 400 performs reproduction control of the decoded motion picture data using the DSP module 405 (Step S403). The motion picture reproduction apparatus 400 converts the reproduction controlled motion picture data into an analog signal using the D/A conversion module 406, and outputs it to the motion picture output module (Step S404).

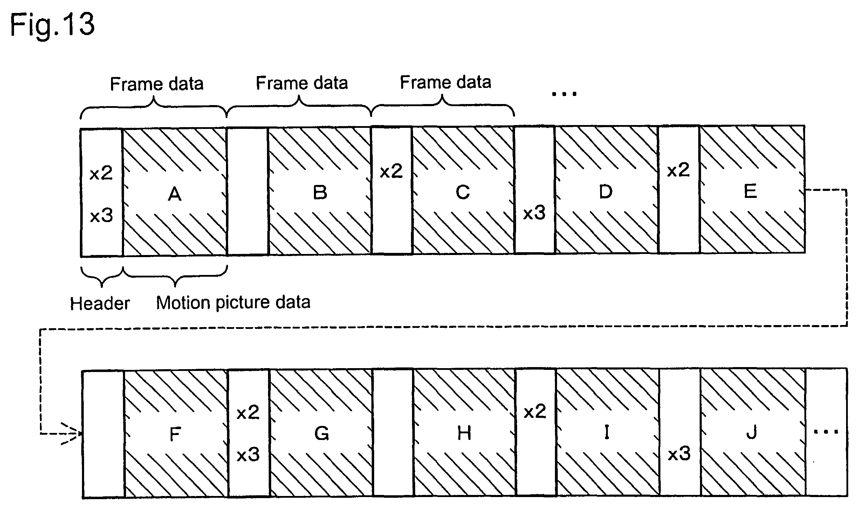

Reproduction control of motion picture data based on reproduction control parameters recorded in the header of a motion picture file is now described using FIG. 10 and FIG. 13. In the reproduction control parameters shown in FIG. 10 there are recorded parameters that specify a picture quality correction process, a caption correction process, and a repeated reproduction process; the motion picture reproduction apparatus controls output of motion picture data according to these parameters.

In the "picture quality" parameters are recorded, for each motion picture reproduction apparatus manufacturer, profiles that specify sharpness, RGB correction, and gamma value. According to the drawing, for example, for an apparatus by Company A, reproduction settings are sharpness increased by "+2" relative to the original motion picture; of RGB (red, green, blue), R (red) increased by "+2"; and gamma value corrected to 1.8. In this working example, values for sharpness and RGB correction are expressed in terms of 10 levels of enhancement intensity relative to original image data; "+2" means "+20%". On the other hand, gamma value represents an absolute value. Motion picture reproduction apparatus 400 selects from among these profiles the profile representing its own manufacturer, and performs picture quality correction on motion picture data using DSP module 405.

In the "caption correction" parameter are established profiles depending on the size of the motion picture output module 407 composed of a CRT, television, or the like. According to the drawing, for example, for a motion picture output module 407 ranging from 22 to 32 inches, captions smaller by one pixel than the size of the original text are displayed in gray at the bottom of the screen. Of course, in order to display captions, text data for displaying captions must be stored independently within the motion picture file. Here, while the expression "captions" is used, the meaning is similar to a telop, and can be any mode for display of text strings. The motion picture reproduction apparatus 400 selects the profile corresponding to the size of its own motion picture output module 407, corrects the text using the DSP module 405, and displays the captions.

In the "repeated reproduction" parameter is established a portion of motion picture data for performing repeated reproduction. According to the drawing, a setting has been made to reproduce three times the motion picture data recorded during a 10-second period coming after 360 seconds and up to 370 seconds elapsed from the beginning of the motion picture data. By means of this setting, the motion picture reproduction apparatus 400 performs repeated reproduction. Repeated reproduction may be carried out by specifying a time range, or by specifying a frame data range. The data range for performing repeated reproduction need not be a continuous range. For example, a mode wherein a specific scene is used at the beginning or end of a motion picture is included as well. In this case, instead of a number of repetitions, information identifying the time for insertion of the scene could be used as the parameter.

In the reproduction control parameters, a parameter relating to fast forward reproduction may be established as well. FIG. 13 is a simplified construction drawing of a motion picture file having established a parameter that relates to fast forward reproduction. As shown in the drawing, the motion picture file is composed of a sequential arrangement of a plurality of frames of data; in the headers of some of the frames of data there are set, by way of a parameter, a flag "x2" or "x3". In this example, an "x2" flag is set every two frames, and an "x3" flag is set every three frames. The motion picture reproduction apparatus 400, in the event that there is an instruction from the user for double speed reproduction or triple speed reproduction, analyzes the header and, in the case of double speed reproduction, reproduces the motion picture data of A, C, E, G, and I, corresponding to headers in which the " x2" flag is present; or in the case of triple speed reproduction, reproduces the motion picture data of A, D, G, and J, corresponding to headers in which the " x3" flag is present.

Flags need not necessarily be set at equal intervals. For example, in the case of n speed reproduction, it is acceptable to set flags such that the number of frames produced overall is 1/n. With such an arrangement, it becomes possible to control reproduction speed in consideration of the weighting of each scene. For example, in portions recording motion picture data such as fast-motion live sports, by reducing the number of frames of data skipped, fast forward playback can take place at slower speed; whereas in portions like shots of scenery having slow motion, by increasing the number of frames of data skipped, fast forward playback can take place at faster speed.

It is optimal if motion picture output state allows control to be switched depending on scene of a motion picture. For example, by enhancing sharpness in scenes of strenuous motion, motion picture can be displayed sharply. In the case of a sunset scene, by emphasizing the red color, the sunset can be displayed more effectively.

The aforementioned processes which accompany reproduction control are of course controllable without reference to the characteristics of the motion picture reproduction apparatus 400.

While working examples of the invention have been described based on Working Example 1 and Working Example 2, the invention is not limited to these working examples, and may take various arrangements without departing from the spirit thereof. The various processes described hereinabove may be realized through software, or realized hardware-wise. As a storage medium for recording audio files or motion picture files in the working examples hereinabove, there may be used a flexible disk, CD-ROM/R/RW, DVD, DVD-R/RW/RAM, MO, memory card, hard disk, motion picture tape, music tape, MD or the like. Besides data transfer by means of a storage medium, audio files or motion picture files may be transferred by a network or wireless communications.

### INDUSTRIAL APPLICABILITY

The present invention is utilizable in output of data which is a coded electrical signal accompanied by passage of time.

## Claims

1. A file creation apparatus comprising:
a data input module for inputting data that is a coded electrical signal accompanied by passage of time;
a parameter input module for inputting an output control parameter that controls time dependent output state of said data in an output apparatus that decodes and outputs said data; and
a file creation module for creating a file comprising said data and said output control parameter.

2. A file creation apparatus according to Claim 1, wherein said file creation module creates a file by means of arranging a plurality of frames of data comprising at least a part of said data, and said output control parameter.

3. A file creation apparatus according to Claim 1, wherein said output control parameter controls fade in or fade out output of said data.

4. A file creation apparatus according to Claim 1, wherein said output control parameter specifies a portion for output when changing output speed of said data.

5. A file creation apparatus according to Claim 1, wherein said output control parameter controls switching of output state at predetermined timing.

6. A file creation apparatus according to any of Claim 1, wherein said parameter input module inputs an output control parameter depending on output environment in said output apparatus.

7. A file creation apparatus according to Claim 1, wherein during output under a predetermined condition, said output control parameter consists of data output while omitting a portion of said data.

8. A file creation apparatus according to Claim 1 wherein said data includes a plurality of channels, and
said output control parameter is data for controlling output state in individual channel units.

9. A data output apparatus comprising:
a file input module for inputting a file, said file comprising data which is a coded electrical signal accompanied by passage of time, and an output control parameter for controlling time dependent output state of said data; and
an output control module for controlling the output state of decoded said data, making reference to said output control parameter.

10. An audio file creation apparatus for creating audio files, said apparatus comprising:
an audio data input module for inputting of audio data;
a parameter input module for input of a reproduction control parameter for controlling reproduction state of said audio data depending on the reproduction apparatus reproducing said audio data; and
an audio file creation module for creating an audio file, said file comprising said audio data and said reproduction control parameter.

11. An audio file creation apparatus according to Claim 10 wherein said reproduction control parameter controls at least a part of the frequency components of said audio data.

12. An audio file creation apparatus according to Claim 10 wherein said reproduction control parameter controls volume during reproduction of said audio data.

13. An audio file creation apparatus according to Claim 10 wherein said reproduction control parameter controls repeated reproduction of at least a part of said audio data.

14. An audio data reproduction apparatus for reproducing audio data, said apparatus comprising:
an audio file input module for inputting an audio file that contains audio data and a reproduction control parameter for controlling time dependent output state of said data; and
a reproduction control module for controlling reproduction state of said audio data, with reference to said reproduction control parameter.

15. A motion picture file creation apparatus for creating motion picture files, comprising:
a motion picture data input module for inputting of motion picture data;
a parameter input module for inputting of a reproduction control parameter for controlling time dependent reproduction state of said motion picture data in on the reproduction apparatus reproducing said motion picture data; and
a motion picture file creation module for creating a motion picture file, said file comprising said motion picture data and said reproduction control parameter.

16. A motion picture file creation apparatus according to Claim 15 wherein said reproduction control parameter controls repeated reproduction of at least a part of said motion picture data.

17. A motion picture file creation apparatus according to Claim 15 wherein said motion picture data includes character string data displayed simultaneously with motion picture, and
said reproduction control parameter controls at least one of display location, size, and color of said character string data.

18. A motion picture data reproduction apparatus for reproducing motion picture data, comprising:
a motion picture file input module for inputting a motion picture file that contains motion picture data and a reproduction control parameter for controlling time dependent output state of said data; and
a reproduction control module for controlling reproduction state of said motion picture data, with reference to said reproduction control parameter.

19. A file creation method comprising:
inputting data which is a coded electrical signal accompanied by passage of time;
inputting an output control parameter that controls time dependent output state of said data in an output apparatus that decodes and outputs said data; and
creating a file comprising said data and said output control parameter.

20. A data output method comprising:
inputting a file that includes data which is a coded electrical signal accompanied by passage of time, and an output control parameter for controlling time dependent output state of said data; and
controlling the output state of decoded said data, making reference to said output control parameter.

21. A audio file creation method of creating audio files, comprising:
inputting audio data;
inputting a reproduction control parameter for controlling reproduction state of said audio data depending on the reproduction apparatus reproducing said audio data; and
creating an audio file, said file including said audio data and said reproduction control parameter.

22. A audio data reproduction method for reproducing audio data, comprising:
inputting an audio file that includes audio data and a reproduction control parameter for controlling time dependent output state of said data; and
controlling reproduction state of said audio data, with reference to said reproduction control parameter.

23. A motion picture file creation method of creating motion picture files, comprising:
inputting motion picture data;
inputting a reproduction control parameter for controlling time dependent reproduction state of said motion picture data in on the reproduction apparatus reproducing said motion picture data; and
creating a motion picture file that includes said motion picture data and said reproduction control parameter.

24. A motion picture data reproduction method for reproducing motion picture data, comprising:
inputting a motion picture file that includes motion picture data and a reproduction control parameter for controlling time dependent output state of said data; and
controlling reproduction state of said motion picture data, with reference to said reproduction control parameter.

25. A computer-readable medium storing a computer program for realizing on a computer
a function of inputting data which is a coded electrical signal accompanied by passage of time;
a function of inputting an output control parameter that controls time dependent output state of said data in an output apparatus that decodes and outputs said data; and
a function of creating a file comprising said data and said output control parameter.

26. A computer-readable medium storing a computer program for realizing on a computer
a function of inputting a file, said file including data which is a coded electrical signal accompanied by passage of time, and an output control parameter for controlling time dependent output state of said data; and
a function of controlling the output state of decoded said data, making reference to said output control parameter.

27. A computer-readable medium storing a computer program for creating an audio file, wherein said computer program realizing on a computer:
a function of inputting audio data;
a function of inputting a reproduction control parameter for controlling reproduction state of said audio data depending on the reproduction apparatus reproducing said audio data; and
a function of creating an audio file, said file including said audio data and said reproduction control parameter.

28. A computer-readable medium storing a computer program for reproducing audio data, wherein said computer program realizing on a computer:
a function of inputting an audio file that contains audio data and a reproduction control parameter for controlling time dependent output state of said data; and
a function of controlling reproduction state of said audio data, with reference to said reproduction control parameter.

29. A computer-readable medium storing a computer program for creating a motion picture file, wherein said computer program realizing on a computer:
a function of inputting motion picture data;
a function of inputting a reproduction control parameter for controlling time dependent reproduction state of said motion picture data in on the reproduction apparatus reproducing said motion picture data; and
a function of creating a motion picture file, said file including said motion picture data and said reproduction control parameter.

30. A computer-readable medium storing a computer program for reproducing motion picture data, wherein said computer program realizing on a computer:
a function of inputting a motion picture file that contains motion picture data and a reproduction control parameter for controlling time dependent output state of said data; and
a function of controlling reproduction state of said motion picture data, with reference to said reproduction control parameter.
